Europäisches Patentamt

European Patent Office

Office européen des brevets

(11) Numéro de publication: **0 493 232 A1**

# (12) DEMANDE DE BREVET EUROPEEN

(21) Numéro de dépôt: **91403504.3**

(22) Date de dépôt: **20.12.91**

(51) Int. Cl.⁵: **G06F 1/00**

(30) Priorité: **27.12.90 FR 9016320**

(43) Date de publication de la demande:
**01.07.92 Bulletin 92/27**

(84) Etats contractants désignés:
**BE DE GB IT NL**

(71) Demandeur: **TELEMECANIOUE**
**43-45 Boulevard Franklin Roosevelt**
**F-92500 Rueil-Malmaison(FR)**

(72) Inventeur: **Hardy, Christian**
**82 Avenue des Martyres**
**F-06600 Antibes(FR)**
Inventeur: **Barillier, Gilbert**
**Les Sausses**
**F-06510 Gattieres(FR)**

(74) Mandataire: **Keib, Gérard et al**
**Bouju Derambure (Bugnion) S.A. 38, avenue**
**de la Grande Armée**
**F-75017 Paris(FR)**

(54) **Procédé de contrôle de l'utilisation d'un poste de travail informatique par mot de passe et poste de travail informatique mettant en oeuvre ce procédé.**

(57) Procédé de contrôle de l'utilisation d'un poste de travail informatique (1) par mot de passe, comprenant le stockage du mot de passe au sein du poste de travail, et à chaque initialisation de celui-ci, la saisie d'une proposition de mot de passe, suivie d'une comparaison de cette proposition avec le mot de passe stocké.

Le mot de passe est stocké dans une unité de mémoire permanente à effacement commandé. Pour débloquer le poste de travail (1) en cas de perte du mot de passe, on prévoit la génération (D1), d'un ensemble (36) d'informations associées au poste bloqué, la communication (D2) par l'utilisateur à un service habilité (S) d'une partie de ces informations, la fourniture (D3) en retour par ce service d'informations codées de déblocage (43), la saisie (D4) de ces dernières par l'utilisateur sur le poste, conduisant, en cas de conformité, à l'effacement du mot de passe initial et au déblocage du poste.

Application en milieu industriel pour le contrôle d'utilisation de postes de travail autonomes ou en réseau.

FIG.3

EP 0 493 232 A1

La présente invention concerne un procédé de contrôle de l'utilisation d'un poste de travail informatique par mot de passe. Elle vise également un poste de travail informatique mettant en oeuvre ce procédé.

Le développement considérable des logiciels professionnels, en particulier des logiciels utilisés dans un contexte d'architecture de réseau, a entraîné inévitablement des problèmes de sécurité et de contrôle d'accès aux postes de travail informatique et de contrôle de l'utilisation de logiciels accessibles sur un réseau.

Il existe déjà des procédés de contrôle de l'utilisation d'un poste de travail informatique mettant en oeuvre une clef mécanique et/ou la présentation d'un mot de passe par l'utilisateur. D'autres procédés font appel à la lecture d'une carte à microprocesseur incorporé détenue par les utilisateurs habilités à un poste de travail informatique prédéterminé. Ces procédés nécessitent la mise en oeuvre d'un lecteur de carte couplé au poste de travail qui est un dispositif coûteux et complexe.

Dans les micro-ordinateurs actuels à accès protégé par mot de passe, en particulier les micro-ordinateurs compatibles PC, le mot de passe est crypté et stocké dans une mémoire RAM permanente de technologie CMOS, alimentée en permanence par une pile. Ce mot de passe est demandé lors de chaque initialisation du micro-ordinateur avant l'exécution du programme d'auto-exécution appelé communément "boot". Ces procédés de contrôle dans lesquels le mot de passe est stocké dans une mémoire alimentée par pile, présentent l'inconvénient majeur de pouvoir être contournés par effacement du contenu de cette mémoire. L'effacement peut être obtenu en ouvrant le boîtier de l'unité centrale du micro-ordinateur, en accédant à la mémoire RAM permanente, et en débranchant la pile d'alimentation ou en court-circuitant les bornes d'alimentation de la mémoire RAM si celles-ci ne sont pas protégées par une diode. Cette opération est effectuée soit par un utilisateur habilité qui, ayant oublié le mot de passe associé au poste de travail qu'il souhaite utiliser, décide d'effacer ce mot de passe oublié pour avoir effectivement libre accès à ce poste, soit par un tiers non autorisé, à des fins de malveillance ou de duplication illicite de logiciels. A l'issue d'une telle manoeuvre relativement simple mais pouvant durer au moins une vingtaine de minutes pour obtenir l'effacement du contenu de la mémoire RAM si le court-circuit n'est pas possible, le mot de passe est effacé et il suffit alors de rebrancher la pile. Le micro-ordinateur peut alors être relancé au prix cependant d'une réécriture de la configuration qui a été inévitablement effacée en même temps que le mot de passe initial.

Bien sûr, les fabricants de micro-ordinateur ont prévu d'empêcher l'accès à l'intérieur du micro-ordinateur en plaçant un verrou mécanique permettant de verrouiller le coffret contenant l'unité centrale. Deux clés sont généralement fournies à l'utilisateur habilité du poste de travail informatique.

Cependant, la perte éventuelle des clés par l'utilisateur et la possibilité de violer assez facilement de tels verrous mécaniques rendent ce type de contrôle par mot de passe relativement inefficace et source de contraintes pour un utilisateur habilité. Il s'agit donc de fournir à ce dernier un procédé de contrôle qui permette de nouveau l'accès à son poste de travail en cas d'oubli ou de perte du mot de passe sans que celui-ci ait à intervenir au sein même du poste de travail.

Le but de la présente invention est de remédier à ces inconvénients en proposant un procédé de contrôle de l'utilisation d'un poste de travail informatique par mot de passe, comprenant une étape de stockage d'un mot de passe au sein du poste de travail, et à chaque initialisation, une étape de saisie d'une proposition de mot de passe émise par un utilisateur potentiel du poste de travail suivie d'une étape de comparaison de ladite proposition avec le mot de passe stocké initialement conduisant soit à une étape d'autorisation d'utilisation du poste de travail en cas de succès de la comparaison, soit à une étape de blocage du poste de travail à l'issue d'un nombre prédéterminé d'exécution des étapes précitées de saisie et de comparaison.

Suivant l'invention, le procédé de contrôle est caractérisé en ce que, au cours de l'étape de stockage, le mot de passe est stocké dans une unité de mémoire permanente à effacement commandé, notamment à effacement électrique de type EEPROM, et en ce qu'il comprend en outre une étape de déblocage du poste de travail, comportant la génération par le poste de travail d'un ensemble d'informations associées au poste de travail bloqué, la communication par l'utilisateur à un service habilité d'une partie desdites informations, la fourniture en retour par ledit service habilité d'informations codées de déblocage et la saisie par l'utilisateur sur le poste de travail desdites informations codées de déblocage, conduisant, en cas de conformité, à l'effacement du mot de passe initial et au déblocage du poste de travail.

Ainsi, avec le procédé selon l'invention, il n'est plus possible d'effectuer une opération manuelle d'effacement du mot de passe d'un poste de travail bloqué et son déblocage est soumis à un échange d'informations entre l'utilisateur et un service habilité, par exemple le fabricant du poste de travail ou un distributeur agréé. Cet échange d'informations garantit une identification du demandeur d'une opération de déblocage et assure au titulaire légitime du poste de travail la possibilité de l'utiliser à nouveau sans intervention interne.

De plus, l'utilisation d'une mémoire de type EEPROM rend particulièrement complexe l'effacement du mot de passe puisque cet effacement ne peut pas être accompli par un simple court-circuit de l'alimentation comme c'est effectivement le cas avec des mémoires RAM de type CMOS alimentées par piles, mais nécessite la génération d'un signal de programmation de niveau de tension prédéterminé.

Dans une version préférée de l'invention, l'étape de saisie d'une proposition de mot de passe est effectuée au cours d'une étape d'exécution automatique entreprise en réponse à une commande d'initialisation du poste de travail informatique.

Ainsi, le contrôle de l'utilisation du poste de travail est réalisé à chaque mise sous tension avant même que l'utilisateur puisse avoir accès à toute fonctionnalité offerte par ou via le terminal. Cette étape de saisie est donc partie intégrante de la procédure d'autotest normalement effectuée au sein d'un micro-ordinateur sous le contrôle de son système d'entrée/sortie de base BIOS.

Suivant un autre aspect de l'invention, le poste de travail informatique mettant en oeuvre le procédé selon l'invention, comprenant au sein d'un coffret une unité de contrôle et de traitement, au moins une unité de mémoire accessible uniquement en lecture notamment de type ROM, des moyens de stockage sur support magnétique, notamment un disque dur, des moyens de visualisation et des moyens de saisie, notamment un clavier, lesdits moyens de stockage sur support magnétique contenant le système d'exploitation du poste de travail et l'unité de mémoire contenant le système d'entrée/sortie de base du poste de travail, est caractérisé en ce qu'il comprend en outre une unité de mémoire permanente à effacement commandé, notamment à effacement électrique de type EEPROM, reliée à l'unité de contrôle et de traitement, cette unité de mémoire permanente à effacement commandé étant agencée pour contenir un mot de passe de contrôle de l'utilisation du poste de travail et en ce que le système d'entrée/sortie de base est adapté pour commander, lors d'une initialisation du poste de travail par un utilisateur, l'affichage sur les moyens de visualisation d'une page écran d'autotest comportant une demande d'entrée du mot de passe, et, en cas de non présentation dudit mot de passe, l'affichage d'une page écran de blocage présentant des informations associées au poste de travail bloqué et une demande d'entrée d'un code de déblocage.

D'autres particularités et avantages de l'invention apparaîtront encore dans la description ci-après. Aux dessins annexés donnés à titre d'exemples non limitatif :

- la figure 1 est une illustration simplifiée d'un poste de travail informatique mettant en oeuvre le procédé selon l'invention ;

- la figure 2 représente de façon schématique les trois pages-écrans d'autotest, de configuration et de blocage mises en oeuvre dans le procédé selon l'invention ;
- la figure 3 est une vue synoptique d'un mode de mise en oeuvre des étapes de déblocage réalisées avec le procédé selon l'invention.

On va maintenant décrire une forme particulière de mise en oeuvre du procédé de contrôle selon l'invention en même temps qu'un poste de travail informatique auquel est appliqué ce procédé.

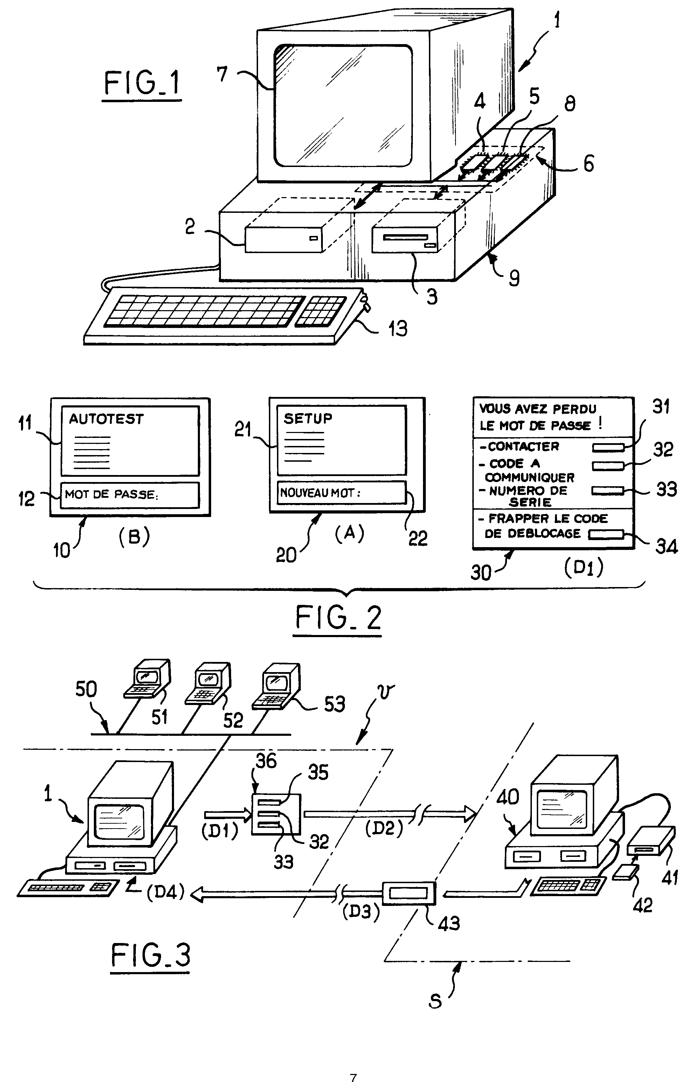

On considère, en référence à la figure 1, un poste de travail informatique, par exemple un micro-ordinateur 1 de type compatible PC ou PS, sur lequel un utilisateur habilité exploite un ou plusieurs logiciels en mode monoposte ou au sein d'un réseau de postes de travail. Le micro-ordinateur 1 comprend usuellement un coffret 9 contenant notamment une carte-mère 6, et des unités de stockage sur support magnétique, par exemple un disque dur 2 et un lecteur de disque souple 3, reliées à la carte mère 6, un moniteur doté d'un écran de visualisation 7 et un clavier 13 permettant notamment la saisie d'informations et de commandes.

La carte mère 6 comprend notamment un microprocesseur 4, assurant les fonctions de contrôle et de traitement et dont la puissance détermine les performances du poste de travail 1 et une mémoire permanente 5 accessible uniquement en lecture notamment de type ROM dans laquelle est inscrit le système d'entrée/sortie de base du micro-ordinateur, appelé communément BIOS, et qui assure l'exécution d'une séquence d'autotest et d'initialisation en réponse à une commande d'initialisation entreprise, soit par mise sous tension du micro-ordinateur, soit par une action spécifique de l'utilisateur sur le clavier.

La carte mère 6 comprend en outre une mémoire permanent à effacement commandé 8, par exemple à effacement électrique de type EEPROM, (mémoire programmable accessible uniquement en lecture et effaçable électriquement) destinée selon l'invention à stocker le mot de passe du micro-ordinateur, de préférence sous forme cryptée. Dans une forme effective de réalisation, la mémoire EEPROM 8 présente une capacité de 16 mots de 16 bits et communique avec le microprocesseur 4.

On va maintenant décrire les différentes phases du procédé de contrôle selon l'invention en référence aux pages écrans représentées en figure 2.

Lors de la mise sous tension de la réinitialisation du micro-ordinateur 1, une page écran d'autotest 10 apparaît sur l'écran 7, du fait de l'exécution d'un programme d'initialisation contenu dans le système d'entrée/sortie de base BIOS. Dans cette page écran 10, apparaît, outre des informations 11 sur le poste de travail, une demande 12 d'entrée d'une proposition de mot de passe. L'utilisateur du poste de travail frappe alors sur le clavier 13 le mot de passe qu'il détient. Le micro-ordinateur 1 enregistre ces frappes de touche en mode semi-aveugle et affiche un caractère graphique à l'issue de chaque frappe afin que l'utilisateur puisse suivre le nombre de caractères frappés. Ceci constitue une partie de l'étape de saisie B.

Il est à noter que si aucun mot de passe n'a été préalablement défini et stocké, aucune demande d'entrée de mot de passe n'est effectuée lors de l'initialisation du micro-ordinateur et son utilisation est donc libre.

Si un mot de passe est effectivement stocké dans la mémoire EEPROM 8, trois essais de saisie sont permis à l'utilisateur. S'ils s'avèrent infructueux, le micro-ordinateur est alors bloqué (étape D1) et une page-écran de blocage 30 est générée. A l'issue de chaque étape de saisie B, une étape de comparaison C est effectuée entre la proposition de mot de passe entrée par l'utilisateur et le mot de passe effectivement stocké dans la mémoire EEPROM 8. Les mots de passe sont de préférence cryptés selon un algorithme de cryptage du type utilisé actuellement dans le domaine du contrôle de l'accès à des informations sécurisées. Si le mot de passe proposé par l'utilisateur correspond au mot de passe stocké, une étape D d'autorisation d'utilisation du poste de travail est entreprise : la page écran d'autotest 10 disparaît pour laisser la place soit aux pages d'accueil d'un logiciel associé préférentiellement au poste de travail concerné, soit aux commandes usuelles du système d'exploitation.

En cours de session d'utilisation du poste de travail informatique 1, l'utilisateur a la possibilité, soit d'introduire un nouveau mot de passe, soit de modifier le mot de passe existant, en faisant effectuer une étape A de stockage de mot de passe. Pour cela, l'utilisateur doit demander l'exécution d'un logiciel utilitaire de configuration SETUP, dont sont dotés la plupart des micro-ordinateurs actuels, mais qui a été modifié pour les besoins de l'invention. Ce logiciel utilitaire est en effet adapté de façon à proposer à l'utilisateur une option d'entrée d'un nouveau mot de passe. Ceci est concrétisé par la présence, à l'intérieur d'une page écran 20 de configuration, d'une invitation 22 à entrer un nouveau mot de passe à côté d'informations et de commandes 21 propres au logiciel utilitaire SETUP. Ce dernier peut être stocké sous forme exécutable, soit dans la mémoire permanente 5 du micro-ordinateur, soit au sein du système d'exploitation DOS dans le disque dur 2.

En cas de blocage D1 du micro-ordinateur 1 à la suite de plusieurs essais infructueux d'entrée d'un mot de passe, par exemple au-delà de trois essais, une page écran de blocage 30 est affichée. Cette page écran de blocage 30 comprend, outre un message prévenant l'utilisateur du blocage du poste de travail du fait de la perte de mot de passe, plusieurs informations associées au poste de travail bloqué parmi lesquelles le numéro de série 33 du poste de travail 1, un code aléatoire 32 ne dépendant ni de l'heure ni d'aucun autre paramètre maîtrisable par l'utilisateur, et les coordonnées 31, notamment téléphoniques, donnant accès au service habilité au déblocage du poste de travail concerné. La page écran de blocage 30 comprend en outre un message invitant l'utilisateur à entrer via le clavier 13, un code de déblocage 34 qui lui sera fourni par le service habilité en échange du numéro de série 33 et du code aléatoire 32 qui doivent être communiqués à ce service par l'utilisateur.

On va maintenant décrire, en référence à la figure 3, les différentes phases de l'étape D de déblocage du poste de travail 1. On considère, de façon plus générale, que le poste de travail 1 bloqué est relié en réseau 50 à d'autres postes de travail informatique 51, 52, 53 qui eux aussi peuvent être dotés du même procédé de contrôle selon l'invention. La génération D1 de la page écran de blocage a fourni à l'utilisateur le code aléatoire à communiquer 32 et le numéro de série 33 du poste concerné. L'utilisateur transmet depuis son site de travail U au service habilité S, un ensemble d'informations comprenant le code aléatoire 32, le numéro de série 33 et ses coordonnées 35, par exemple son nom, la raison sociale de son entreprise, ou un numéro de téléphone pour rappel ultérieur. Cette étape de communication D2 peut être réalisée par téléphone, télécopie, télex ou tout autre moyen de communication disponible.

Le service habilité S est équipé d'un micro-ordinateur 40, ou toute autre unité de contrôle et de traitement équivalente, sur lequel est installé un logiciel utilitaire de déblocage dont l'accès est conditionné par la présentation de droits d'utilisation associés. Le micro-ordinateur 40 peut, à titre d'exemple, être équipé d'un support de clé 41 pouvant recevoir un ou plusieurs modules clés 42 contenant des droits d'utilisation. Un tel dispositif est par exemple décrit dans les demandes de brevet français 90 06112 et 90 06113 du 16 Mai 1990 au nom de la Demanderesse.

Un opérateur du service habilité S entre les informations communiquées par l'utilisateur et demandées par le logiciel de déblocage. Celui-ci, calcule, suivant un algorithme particulier, un code de déblocage 43 à partir des informations communiquées. Après fourniture D3 du code de déblocage 43 en retour à l'utilisateur, ce dernier saisit le code de déblocage au cours d'une étape de saisie D4 alors que la page écran de blocage 30 est encore présente à l'écran. Le logiciel associé à l'étape de déblocage D est inclus dans la mémoire permanente 5 au sein du système d'entrée/sortie de base BIOS. Ce logiciel compare, éventuellement après cryptage, le code de déblocage saisi 43 à un code de référence, calculé localement au niveau du poste de travail bloqué à partir des informations de numéro de série et de code aléatoire, et inaccessible à l'utilisateur. S'il y a conformité du code de déblocage, le poste de travail 1 est effectivement débloqué et la page écran de blocage 30 disparaît pour laisser la place soit aux pages d'accueil du logiciel d'application préférentiellement associé au poste de travail 1, soit à l'écriture par l'utilisateur, de commandes du système d'exploitation. Le déblocage du poste de travail 1 s'effectue par l'effacement du mot de passe présent dans la mémoire EEPROM 8. La non conformité d'un code de déblocage saisi a pour effet de maintenir le poste de travail en situation bloquée.

Il faut noter en outre que les mots de passe sont de préférence cryptés au sein du poste de travail informatique 1, selon un algorithme de cryptage prédéterminé, avant d'être stockés dans la mémoire EEPROM 8. L'algorithme est contenu sous forme exécutable dans la mémoire permanente 5 qui contient le système BIOS.

Bien sûr, la présente invention n'est pas limitée aux exemples qui viennent d'être décrits et de nombreux aménagements peuvent être apportés à ces exemples sans sortir du cadre de l'invention.

Ainsi, le procédé selon l'invention peut être appliqué à de nombreux types de postes de travail, fixes ou portables, autonomes ou au sein d'un réseau qui peut être unique ou multiple. En outre, on peut envisager, en fonction des progrès futurs dans la technologie des circuits intégrés, d'autres types de mémoire permanente à effacement commandé que la mémoire à effacement électrique utilisée dans l'exemple décrit. Enfin, on peut imaginer un agencement quelconque des pages écrans du procédé, en ce qui concerne la langue utilisée, les caractères, couleurs, et codes choisis pour la conception de ces pages écrans.

**Revendications**

1. Procédé de contrôle de l'utilisation d'un poste de travail informatique (1) par mot de passe, comprenant une étape de stockage (A) d'un mot de passe au sein du poste de travail (1), et à chaque initialisation de celui-ci, une étape de saisie (B) d'une proposition de mot de passe émise par un utilisateur potentiel dudit poste de travail (1), suivie d'une étape de comparaison (C) de ladite proposition avec le mot de passe initialement stocké, conduisant soit à une étape d'autorisation d'utilisation (D) du poste de travail (1) en cas de succès de la comparaison, soit à une étape de blocage du poste de travail (1) à l'issue d'un nombre prédéterminé d'exécutions des étapes précitées de saisie (B) et de comparaison (C),
caractérisé en ce que :
- au cours de l'étape de stockage (A), le mot de passe est stocké dans une unité de mémoire permanente à effacement commandé (5), notamment à effacement électrique de type EEPROM,
- il est prévu en outre une étape de déblocage (D) du poste de travail (1), comportant la génération (D1) par le poste de travail (1) d'un ensemble d'informations associées (31, 32, 33) au poste de travail bloqué (1), la communication (D2) par l'utilisateur à un service habilité (S) d'une partie (32, 33) desdites informations, la fourniture (D3) en retour par ledit service habilité, d'informations codées de déblocage (43) et la saisie par l'utilisateur sur le poste de travail (1) desdites informations codées de déblocage (43), conduisant, en cas de conformité, à l'effacement du mot de passe initial et au déblocage du poste de travail (1).

2. Procédé selon la revendication 1, caractérisé en ce que l'étape de saisie (B) est effectuée au cours d'une étape d'exécution automatique entreprise en réponse à une commande d'initialisation du poste de travail informatique (1).

3. Procédé selon l'une des revendications 1 ou 2, caractérisé en ce que l'étape initiale de stockage (A) d'un mot de passe est effectuée lors de l'exécution d'un programme utilitaire de configuration (SETUP).

4. Procédé selon l'une des revendications 1 à 3, caractérisé en ce que l'ensemble d'informations associées au poste de travail bloqué (1) comprend un code aléatoire (32) et un numéro de série (33) du poste de travail informatique (1).

5. Procédé selon l'une des revendications 1 à 4, caractérisé en ce que le mot de passe du poste de travail informatique (1) peut être à tout instant modifié au cours d'une session normale de travail, par exécution d'une étape de modification de mot de passe incluse dans le programme utilitaire de configuration (SETUP) consécutive à une réintroduction du mot de passe à modifier.

**6.** Procédé selon l'une des revendications 1 à 5, caractérisé en ce que les informations codées de déblocage (43) sont générées, à partir des informations (36) communiquées par l'utilisateur, par exécution d'un logiciel protégé de déblocage installé sur des moyens de contrôle et de traitement (40), notamment un micro-ordinateur, mis en oeuvre par le service habilité (S), l'exécution dudit logiciel protégé de déblocage étant conditionnée par la présentation de droits d'utilisation associés audit logiciel.

**7.** Procédé selon l'une des revendications 1 à 6, caractérisé en ce que les informations associées au poste de travail bloqué comprennent en outre des coordonnées pour contacter le service habilité (S), notamment des coordonnées téléphoniques.

**8.** Poste de travail informatique (1), mettant en oeuvre le procédé selon l'une des revendications précédentes, comprenant au sein d'un coffret (9) une unité de contrôle et de traitement (4), au moins une unité de mémoire accessible uniquement en lecture (5), des moyens de stockage locaux ou accessibles via un réseau, notamment sur support magnétique (2, 3), des moyens de visualisation (7) et des moyens de saisie (13), notamment un clavier, lesdits moyens de stockage sur support magnétique (2, 3) contenant le système d'exploitation (DOS) du poste de travail (1), et l'unité de mémoire permanente (5) contenant le système d'entrée/sortie de base (BIOS) du poste de travail (1), caractérisé en ce qu'il comprend en outre une unité de mémoire permanente à effacement commandé (8), notamment à effacement électrique de type EEPROM, reliée à l'unité de contrôle et de traitement (4), cette unité de mémoire permanente à effacement commandé (8) étant agencée pour contenir un mot de passe de contrôle de l'utilisation du poste de travail (1) et en ce que le système d'entrée/sortie de base (BIOS) est adapté pour commander, lors d'une initialisation du poste de travail (1) par un utilisateur, l'affichage sur les moyens de visualisation (7) d'une page écran d'autotest (20) comportant une demande d'entrée du mot de passe, et en cas de non conformité du mot de passe frappé, l'affichage d'une page écran de blocage (30) présentant des informations associées (31, 32, 33) au poste de travail bloqué et une demande d'entrée d'un code de déblocage (34).

**9.** Poste de travail informatique (1) selon la revendication 8, doté d'un logiciel utilitaire de configuration (SETUP), caractérisé en ce que ce logiciel utilitaire de configuration (SETUP) est adapté pour commander l'affichage ou les moyens de visualisation (7) d'une page écran de configuration (20) comprenant une demande d'entrée d'un nouveau mot de passe par l'utilisateur du poste de travail informatique (1), et pour crypter , suivant un algorithme de cryptage prédéterminé, ce nouveau mot de passe et le stocker dans l'unité de mémoire permanente à effacement commandé (8).

**10.** Poste de travail informatique (1) selon la revendication 9, caractérisé en ce que le logiciel utilitaire de configuration (SETUP) adapté est stocké sous forme exécutable dans l'unité de mémoire permanente (5).

**11.** Poste de travail informatique selon la revendication 9, caractérisé en ce que le logiciel utilitaire de configuration adapté (SETUP) est stocké sous forme exécutable par le système d'exploitation dans une unité de stockage locale ou distante.

**12.** Poste de travail informatique (1) selon l'une des revendications 8 à 11, caractérisé en ce que le système d'entrée/sortie de base (BIOS) est agencé pour crypter, suivant un algorithme de cryptage prédéterminé une proposition de mot de passe entrée à partir des moyens de saisie (13) par l'utilisateur, et pour comparer ladite proposition cryptée avec le mot de passe crypté stocké dans l'unité de mémoire permanente à effacement commandé (5).

FIG.1

AUTOTEST

MOT DE PASSE:

(B)

SETUP

NOUVEAU MOT:

(A)

VOUS AVEZ PERDU
LE MOT DE PASSE !

- CONTACTER

- CODE A
  COMMUNIQUER
- NUMERO DE
  SERIE

- FRAPPER LE CODE
  DE DEBLOCAGE

(D1)

FIG.2

(D1)

(D2)

(D3)

(D4)

FIG.3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| Y | IBM TECHNICAL DISCLOSURE BULLETIN. vol. 28, no. 6, Novembre 1985, NEW YORK US page 2530; 'METHOD OF PROTECTING DATA ON A PERSONAL COMPUTER' | 1-3 | G06F1/00 |
| A | * le document en entier * | 8-10 | |
| | --- | | |
| Y | EP-A-0 268 139 (IBM) | 1-3 | |
| A | * figures 1-17 * | 4,6,8,9, 11 | |
| | * colonne 7, ligne 26 - ligne 43 * * colonne 8, ligne 15 - colonne 9, ligne 19 * * colonne 10, ligne 50 - colonne 11, ligne 33 * * colonne 12, ligne 24 - colonne 15, ligne 33 * | | |
| | ----- | | |

**DOMAINES TECHNIQUES RECHERCHES (Int. Cl.5 )**

G06F

Le présent rapport a été établi pour toutes les revendications

| Lieu de la recherche | Date d'achèvement de la recherche | Examinateur |
|---|---|---|
| LA HAYE | 18 MARS 1992 | WEISS P. |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons

& : membre de la même famille, document correspondant

EPO FORM 1503 03.82 (P0402)